(19) Europäisches Patentamt / European Patent Office / Office européen des brevets

(11) **EP 1 828 804 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(21) Anmeldenummer: 05776162.9

(22) Anmeldetag: **10.08.2005**

(51) Int Cl.:
***G01S 13/34*** *(2006.01)*

(86) Internationale Anmeldenummer:
**PCT/EP2005/053940**

(87) Internationale Veröffentlichungsnummer:
**WO 2006/045649 (04.05.2006 Gazette 2006/18)**

(54) **FMCW-RADAR MIT STANDZIELUNTERDRÜCKUNG**

FMCW RADAR FEATURING SUPPRESSION OF STATIONARY TARGETS

RADAR FMCW A ATTENUATION D'EMPLACEMENTS CIBLES

(84) Benannte Vertragsstaaten:
**DE FR GB IT**

(30) Priorität: **29.10.2004 DE 102004052521**

(43) Veröffentlichungstag der Anmeldung:
**05.09.2007 Patentblatt 2007/36**

(73) Patentinhaber: **ROBERT BOSCH GMBH**
**70442 Stuttgart (DE)**

(72) Erfinder:
• **HILSEBECHER, Joerg**
**70839 Gerlingen (DE)**
• **HAUK, Joachim**
**71272 Renningen-Malmsheim (DE)**
• **OLBRICH, Herbert**
**71277 Rutesheim (DE)**

(56) Entgegenhaltungen:
DE-A1- 3 243 825    US-A- 4 348 675
US-A- 4 620 192    US-A- 5 285 207

**Beschreibung**

Stand der Technik

Die Erfindung betrifft ein FMCW-Radarsystem für Kraftfahrzeuge.

FMCW-Radarsysteme werden bei Kraftfahrzeugen beispielsweise zur automatischen Abstandsregelung (ACC; Adaptive Cruise Control) eingesetzt und dienen hier zur Messung des Abstands und der Relativgeschwindigkeit eines vorausfahrenden Fahrzeugs. Grundsätzlich läßt sich mit einem Radarsystem der Abstand eines Radarziels aus der Signallaufzeit des Radarechos bestimmen. Bei Radarzielen, die sich vom Radarsensor weg oder auf diesen zu bewegen, ergibt sich außerdem aufgrund des Dopplereffektes eine Frequenzverschiebung des Empfangssignals, und aus dieser Frequenzverschiebung läßt sich die Relativgeschwindigkeit des Objekts berechnen.

Das Funktionsprinzip eines FMCW-Radars (FMCW = Frequency Modulated Continuous Wave) beruht darauf, daß das Radar-signal kontinuierlich gesendet wird, jedoch mit einer modulierten, also zeitlich veränderlichen Frequenz. Da sich während der Laufzeit des Radarsignals zum Radarziel und zurück die Frequenz des gesendeten Signals in bekannter Weise ändert, ist der Frequenzunterschied zwischen dem gesendeten Signal und dem Empfangssignal von der Signallaufzeit und damit vom Abstand des Radarziels abhängig. Diese Abhängigkeit ermöglicht allerdings noch keine eindeutige Bestimmung des Abstands, weil der Frequenzunterschied bei beweglichen Radarzielen auch von der Relativgeschwindigkeit abhängig ist. Es sind verschiedene Möglichkeiten bekannt, diese Mehrdeutigkeit zu beheben. Bei einem gebräuchlichen Verfahren, wie es beispielsweise in DE 42 42 700 A1 beschrieben wird, moduliert man die Frequenz mit zwei abwechselnd aufeinander folgenden Rampen, die sich in ihrer Steigung unterscheiden (vorzugsweise nur im Vorzeichen der Steigung). Aus den so erhaltenen Zielantworten lassen sich dann für jedes Radarziel der Abstand und die Relativgeschwindigkeit eindeutig bestimmen.

Im Hinblick auf eine hohe Abstandsauflösung ist es erwünscht, die Frequenz mit möglichst steiler Rampe zu modulieren. Das hat allerdings zur Folge, daß die von der Relativgeschwindigkeit abhängigen Dopplerverschiebungen im Vergleich zu der abstandsabhängigen Frequenzverschiebung nur klein sind. Aus diesem Grund ist es oft schwierig, Objekte voneinander zu trennen, die unterschiedliche Relativgeschwindigkeiten aufweisen aber sich in einem annähernd gleichen Abstand befinden.

Daraus kann sich insbesondere dann ein Problem ergeben, wenn der Radarsensor neben den vorausfahrenden Fahrzeugen auch eine größere Anzahl von Standzielen ortet. Das ist z. B. im Bereich von Fahrbahnverengungen an Baustellen oder Brücken der Fall, wo die Leitplanken einen so geringen seitlichen Abstand zur Fahrbahnmitte haben, daß sie von der Radarkeule erfaßt werden. Die senkrechten Pfosten, an denen die Leitplanken montiert sind, bilden dann eine große Anzahl von Standzielen, die die vom vorausfahrenden Fahrzeug erhaltene Zielantwort überdecken, so daß die Zielantwort vom Fahrzeug nicht oder zumindest nicht zuverlässig oder nur mit sehr hohem Auswertungsaufwand identifiziert werden kann.

Aus der DE 32 43 825 A1 ist es bekannt, das Sendesignal eines FM-CW-Radars periodisch mit einem Sägezahn zu modulieren. Die Phase des Sendesignals zu Beginn jedes Sägezahns wird als Bezug genommen, indem ein kohärentes Referenzsignal gebildet wird. Nach Mischen des Empfangssignals mit dem zum Sendesignal kohärenten Referenzsignal wird das so gewonnene, ausgefilterte Zwischenfrequenzsignal abgetastet, digitalisiert einer schnellen Fouriertransformation unterworfen. Die Ergebnisse werden mittels Filtern nach Frequenzen getrennt einer zweiten Transformation unterworfen, die sich nur um andere Phasenwinkel von einer Fouriertransformation unterscheidet. Damit werden die Filterausgänge der ersten Transformation nach Dopplergeschwindigkeiten getrennt. Für Echos von Bewegtzielen mit einer bestimmten Radialgeschwindigkeit, kann der aus der ersten Fouriertransformation gewonnene grobe Entfernungsschätzwert korrigiert werden.

Aus der US 5,285,207 ist eine modulierte Dauerstrich- Radareinrichtung oder eine Impuls-Doppler-Radreinrichtung bekannt, die es ermöglicht, Phasendifferenzen zwischen von einem oder mehrerern Zielobjekten zurückkehrenden Echosignalen zu unterscheiden und auch Amplitudendifferenzen bei dem einen oder den mehreren Zielobjekten zu unterscheiden. Dabei werden ausgewählte Doppler-Frequenzen mittels eines schmalbandigen Bandsperfilters gedämpft, wobei sich der Grad der Dämpfung zwischen mindestens zwei Pegeln auswählen lässt, so dass ein steuerbarer Bandpaß entsteht.

Aus der US 4,620,192 ist ein Dauerstrichradar bekannt bei dem unmodulierte Dauerstrichsignale ausgesandt werden und das im Empfänger herabgemischte Empfangssignalk zur eindeutigen Auswertung des Empangsbereichs frequenzmoduliert wird. Weiterhin sind im Empfangskanal Filter vorgesehen um unerwünschte Bodenechos auszufiltern.

Aus der US 4,348,675 ist ein FMCW-Radarsystem bekannt, bei dem die Sendesignale und Empfangssignale in ein Zwischenfrequenzband gemischt werden und dieses Zwischenfrequenzsignal mit einer Vielzahl miteinander geschalteter Einzelfilter gefiltert wird um für jeden Einzelfilter ein Ausgangssignal zu erhalten, einer Detektionsschaltung zugeführt wird.

Vorteile der Erfindung

Die Erfindung mit den in Anspruch 1 angegeben Merkmalen bietet den Vorteil, daß in Gegenwart von Standzielen eine zuverlässigere Ortung von bewegten Radarzielen ermöglicht wird.

Dies wird erfindungsgemäß dadurch erreicht, daß das Radarsystem eine Filtereinrichtung aufweist, die die Zielantwort von Standzielen selektiv unterdrückt. In diesem Zusammenhang bedeutet "selektiv", daß die Zielantwort von bewegten Objekten durch die Filterung nicht oder zumindest weniger stark unterdrückt oder gar verstärkt wird, so daß sich die bewegten Objekte dann deutlicher vom Hintergrund der Standziele abheben und einfach und sicher identifiziert werden können.

Vorteilhafte Ausgestaltungen und Weiterbildungen der Erfindung ergeben sich aus den Unteransprüchen.

In einer bevorzugten Ausführungsform ist die Filtereinrichtung so ausgebildet, daß sie mehrere Zielantworten, die mit einem bestimmten Zeitversatz aufgenommen wurden, derart überlagert, daß für Stadtziele destruktive Interferenz vorherrscht. Dies ist möglich, weil die Phasendifferenz zwischen den Zielantworten, die mit einem Zeitversatz $\Delta T$ aufgenommen wurden, von der Abstandsdifferenz abhängig ist, um die sich der Zielobjektabstand während der Zeit $\Delta T$ ändert. Diese Abstandsdifferenz ist gleich dem Produkt aus Relativgeschwindigkeit und Zeitversatz $\Delta T$. Für Standziele ist die Relativgeschwindigkeit dem Betrage nach gleich der Eigengeschwindigkeit des Fahrzeugs. Durch geeignete Wahl des Zeitversatzes $\Delta T$ läßt sich daher erreichen, daß destruktive Interferenz gerade dann auftritt, wenn das Verhältnis zwischen Relativgeschwindigkeit und Eigengeschwindigkeit gleich 1 ist, also bei Standzielen.

Aufgrund der periodischen Natur der Radarwellen ergibt sich destruktive Interferenz allerdings nicht nur bei diesem speziellen Geschwindigkeitsverhältnis, sondern immer dann, wenn das Verhältnis zwischen Relativgeschwindigkeit und Eigengeschwindigkeit eine ungerade ganze Zahl ist. Diese zusätzlichen destruktiven Interferenzen liegen jedoch in der Regel in Geschwindigkeitsbereichen, die beim praktischen Einsatz des Radarsystems nicht auftreten.

Andererseits läßt sich durch geeignete Auslegung des Filters erreichen, daß bei Relativgeschwindigkeiten in der Nähe von null konstruktive Interferenz auftritt, so daß die Zielantwort von mit etwa gleicher Geschwindigkeit vorausfahrenden Fahrzeugen durch die Filterung sogar noch verstärkt wird.

Da störende Standziele, die durch die erfindungsgemäße Filterung unterdrückt werden, sich normalerweise nicht auf der Fahrbahn sondern am Fahrbahnrand befinden werden, erscheinen sie für das Radarsystem schwerpunktmäßig unter einem bestimmten Azimutwinkel $\alpha$ relativ zur Fortbewegungsrichtung des Fahrzeugs. Zwischen den Vektoren der Eigengeschwindigkeit und der Relativgeschwindigkeit ergibt sich daher eine entsprechende Winkeldifferenz $\alpha$, die gemäß einer Weiterbildung der Erfindung bei der Auslegung des Filters durch einen entsprechenden Korrekturterm berücksichtigt wird.

In einer Ausführungsform der Erfindung werden die Zielantworten, die bei der Filterung einander überlagert werden, während zweier verschiedener Modulationsrampen des gesendeten Radarsignals aufgenommen, beispielsweise während zweier aufeinanderfolgender Rampen. Grundsätzlich können diese beiden Rampen unterschiedliche Steigungen und sogar ein entgegengesetztes Vorzeichen der Steigung haben. Für eine einfache Auswertung der Signale ist es jedoch vorteilhaft, wenn die Steigungen gleiches Vorzeichen haben, und insbesondere wenn sie einander gleich sind.

In einer anderen Ausführungsform ist es auch möglich, die beiden zu überlagernden Zielantworten zeitversetzt während derselben Rampe des Modulationssignals aufzunehmen. In diesem Fall muß allerdings durch eine geeignete Korrektur dem Umstand Rechnung getragen werden, daß die Zielantworten hier auf verschiedenen Frequenzbereichen des gesendeten Radarsignals aufgenommen werden.

Die Zielantworten werden jeweils einer Spektralanalyse unterzogen (vorzugsweise mittels schneller Fourier-Transformation (FFT)), und die Überlagerung erfolgt dadurch, daß die gewonnenen Spektren elementweise komplex addiert werden.

Zeichnung

Ausführungsbeispiele der Erfindung sind in den Zeichnungen dargestellt und in der nachfolgenden Beschreibung näher erläutert.

Es zeigen:

Figur 1          eine Prinzipskizze zur Erläuterung der Problemstellung;

Figur 2          ein Blockdiagramm eines FMCW-Radarsystems;

Figur 3          ein ungefiltertes Spektrum einer Zielantwort;

Figur 4          eine Dämpfungsfunktion eines Filters;

Figur 5          das gefilterte Spektrum; und

Figuren 6 und 7     Frequenz/Zeit-Diagramme für unterschiedliche Modulationsformen des Radarsignals.

Beschreibung desr Ausführungsbeispiele

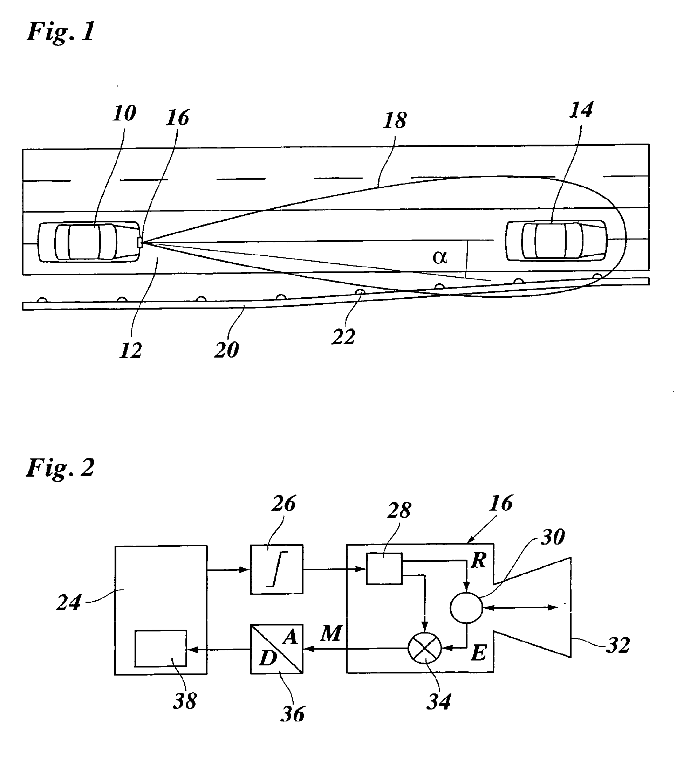

Figur 1 zeigt ein Fahrzeug 10, das auf einer Fahrbahn 12 fährt und mit einem FMCW-Radarsystem ausgerüstet ist. Dieses Radarsystem dient beispielsweise dazu, den Abstand des Fahrzeugs 10 zu einem vorausfahrenden Fahrzeug 14 zu messen. Zu diesem Zweck ist vorn am Fahrzeug 10 ein Radarsensor 16 eingebaut, der eine Radarkeule 18 emittiert, die den vorausliegenden Abschnitt der Fahrbahn 12 und somit auch das Fahrzeug 14 überstreicht. Das von der Rückfront des Fahrzeugs 14 reflektierte Radarsignal wird als sogenannte Zielantwort vom Radarsensor 16 empfangen. Durch Auswertung dieser Zielantwort werden der Abstand und die Relativgeschwindigkeit des Fahrzeugs 14 bestimmt.

Seitlich neben der Fahrbahn 12 ist eine Leitplanke 20 angebracht, die auf Pfosten 22 abgestützt ist. Normalerweise ist die Leitplanke 20 seitlich so weit abgelegen, daß sie von der Radarkeule 18 nicht überstrichen wird. Im Bereich von Engstellen, beispielsweise unter Brücken, kann sich jedoch die Leitplanke 20 der Fahrbahn 12 so weit annähern, daß die Pfosten 22 von der Radarkeule 18 überstrichen und somit vom Radarsensor 16 als stehende Reflexionsziele (Standziele) geortet werden. Die Zielantwort dieser Standziele kann das eigentliche Nutzsignal, die Zielantwort vom Fahrzeug 14, so maskieren, daß dieses Nutzsignal nicht mehr korrekt erfaßt und ausgewertet werden kann. Bei dem hier beschriebenen Radarsystem ist deshalb eine Filtereinrichtung vorgesehen, durch die das vom Radarsensor 16 empfangene Signal schon vor der eigentlichen Auswertung so gefiltert wird, daß Zielantworten von Standzielen, also beispielsweise von den Pfosten 22, unterdrückt werden.

In Figur 2 ist das Radarsystem des Fahrzeugs 10 als Blockdiagramm dargestellt. Dieses Radarsystem umfaßt eine beispielsweise durch einen Digitalrechner gebildete Steuer- und Auswerteeinrichtung 24, die über eine Linearisierungseinrichtung 26 ein Modulationssignal an eine Sendeeinrichtung 28 liefert, die Teil des Radarsensors 16 ist. Die Sendeeinrichtung 28 erzeugt ein Radarsignal R mit einer durch das Modulationssignal bestimmten Frequenz. Dieses Radarsignal R wird über eine Übertragungseinrichtung 30 und eine Antenne 32 abgestrahlt. Das von einem Radarziel reflektierte Echo wird wieder von der Antenne 32 empfangen und über die Übertragungseinrichtung 30 als Empfangssignal E an einen Mischer 34 weitergeleitet. Im Mischer 34 wird das Empfangssignal E mit dem gesendeten Radarsignal R oder einem dazu proportionalen Signal gemischt. Diese Mischung entspricht mathematisch einer Multiplikation der Signalwerte und ergibt neben einem hochfrequenten Anteil, der durch Filterung beseitigt wird, einen niederfrequenten Schwebungsanteil, dessen Frequenz der Differenz zwischen der Frequenz des Radarsignals R und der Frequenz des Empfangssignals E entspricht. Dieser niederfrequente Anteil wird als Mischungssignal M an einen Analog/Digital-Wandler 36 ausgegeben, der das Mischungssignal in regelmäßigen Zeitintervallen digitalisiert und das digitalisierte Signal zur weiteren Auswertung an die Steuer- und Auswerteeinrichtung 24 ausgibt.

Die Steuer- und Auswerteeinrichtung 24 enthält eine Filtereinrichtung 38, die das digitalisierte Mischungssignal M zunächst einer Filterung unterzieht, bevor es weiter ausgewertet wird.

Bei dieser Filterprozedur wird das digitalisierte Mischungssignal, das die Zielantwort von den georteten Signalzielen repräsentiert, zunächst einer schnellen Fourier-Transformation(FFT) unterzogen. Auf diese Weise erhält man ein Frequenzspektrum der Zielantwort in der Form einer Funktion $S(f)$ der Frequenz f. Diese Funktion ist die Fourier-Transformierte des von der Zeit t abhängigen Mischungssignals $M(t)$ und hat komplexe Funktionswerte.

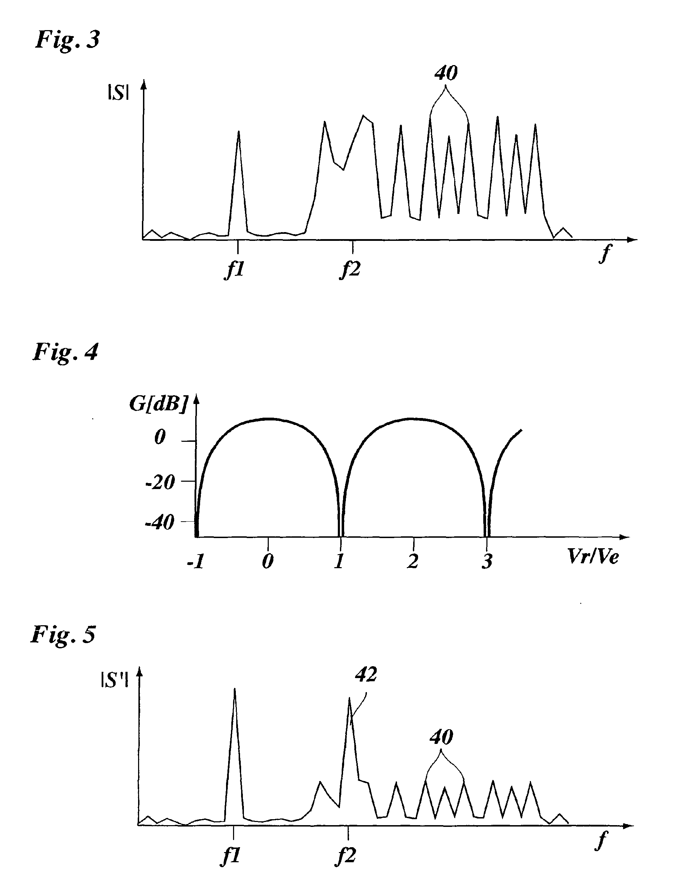

Figur 3 zeigt ein Beispiel eines solchen Fequenzspektrums. Von den komplexen Funktionswerten $S(f)$ sind hier nur die Absolutbeträge |S| graphisch dargestellt. Generell zeichnet sich in diesem Spektrum jedes Radarziel durch einen Peak bei einer bestimmten Frequenz ab. Beispielsweise zeigt Figur 3 einen solchen isolierten Peak bei einer Frequenz f1. Die Lage dieses Peaks, also die Frequenz f1, ist bei einem FMCW-Radar einerseits vom Abstand d des Zielobjekts und andererseits von der Relativgeschwindigkeit Vr des Zielobjekts abhängig. Anhand des in Figur 3 gezeigten Spektrums läßt sich deshalb ohne zusätzliche Informationen noch nicht entscheiden, ob der Peak bei f1 zu einem Standziel oder zu einem bewegten Objekt gehört. Verfahren zur Beseitigung dieser Mehrdeutigkeit sind jedoch bekannt und werden weiter unten kurz erläutert.

Figur 3 zeigt außerdem bei etwas höheren Fequenzen eine Vielzahl von Peaks 40. Als Beispiel soll angenommen werden, daß es sich bei diesen Peaks um die Zielantwort der Pfosten 22 in Figur 1 handelt. Die Zielantwort des Fahrzeugs 14 müßte eigentlich durch einen weiteren Peak bei einer Frequenz f2 repräsentiert werden. Da jedoch der Abstand des Fahrzeugs 14 etwa gleich dem Abstand der Pfosten 22 ist und die unterschiedlichen Relativgeschwindigkeiten des Fahrzeugs 14 und der Pfosten 22 nur zu einer verhältnismäßig geringen Frequenzverschiebung führen, wird der Peak bei f2 in Figur 3 nahezu vollständig durch die dichte Folge der Peaks 40 maskiert, so daß die Lage dieses Peaks nicht oder nur schwer auszumachen ist.

Die Filtereinrichtung 38, deren Funktionsweise weiter unten näher erläutert wird, ist nun so ausgebildet, daß sie die von Standzielen einerseits und von bewegten Zielen andererseits herrührenden Zielantworten unterschiedlich stark dämpft. Speziell ist in dem hier beschriebenen Beispiel die durch die Filtereinrichtung 38 bewirkte Dämpfung oder Verstärkung G vom Verhältnis Vr/Ve zwischen der Relativgeschwindigkeit Vr des betreffenden Zielobjekts und der Eigengeschwindigkeit Ve des Fahrzeugs 10 abhängig.

In Figur 4 ist die Verstärkungsfunktion G (in Dezibel[dB]) gegen das Geschwindigkeitsverhältnis Vr/Ve aufgetragen. Die Relativgeschwindigkeit Vr wird hier bei Annäherung an das Zielobjekt positiv gezählt. Das Geschwindigkeitsverhältnis Vr/Ve = 1 entspricht daher einem Standziel. Man erkennt in Figur 4, daß für solche Standziele die Zielantwort sehr stark gedämpft wird. Dieses Dämpfungsmuster wiederholt periodisch bei allen ungeraden Geschwindigkeitsverhältnissen, also bei -1, +1, 3, .... In den Zwischenbereichen ist die Dämpfung jeweils geringer, und bei geradzahligen Geschwindigkeitsverhältnissen 0, 2, ... bewirkt die Filterung eine Verstärkung (G > 0).

Das Geschwindigkeitsverhältnis Vr/Ve = 0 gilt für Zielobjekte, deren Relativgeschwindigkeit Vr gleich null ist, also für Objekte, die sich annähernd mit der gleichen Geschwindigkeit wie das Fahrzeug 10 bewegen. Wenn diese Bedingung für vorausfahrende Fahrzeuge wie das Fahrzeug 14 zumindest nährungsweise erfüllt ist, wird durch die Filterprozedur die Empfindlichkeit des Radarsensors für vorausfahrende Fahrzeuge gesteigert, während Standziele stark unterdrückt werden.

Das Ergebnis ist in Figur 5 gezeigt. Hier ist in einem zu Figur 3 analogen Diagramm das Spektrum |S'| nach der Filterung gezeigt. Der Peak bei f1 ist nun überhöht, während die Peaks 40 stark unterdrückt sind, so daß sich nun bei der Frequenz f2 ein deutlicher, gleichfalls überhöhter Peak 42 abzeichnet, der das Fahrzeug 14 repräsentiert. Dieses gefilterte Spektrum wird dann in der Steuer- und Auswerteeinrichtung 24 in üblicher Weise ausgewertet, um den Abstand d und die Relativgeschwindigkeit Vr des Fahrzeugs 14 zu bestimmen.

Die aus Figur 4 ersichtliche starke Dämpfung bei den Geschwindigkeitsverhältnissen -1, 3 etc. ist in der Praxis im allgemeinen nicht von Bedeutung und kann ohne weitere toleriert werden. Beispielsweise entspräche das Geschwindigkeitsverhältnis -1 einem vorausfahrenden Fahrzeug, das sich von dem eigenen Fahrzeug 10 entfernt und dessen Absolutgeschwindigkeit doppelt so groß wäre wie die Eigengeschwindigkeit Ve des Fahrzeugs 10. Beispielsweise bei einer Eigengeschwindigkeit Ve = 130 km/h würde somit die Zielantwort des vorausfahrenden Fahrzeugs nur dann unterdrückt, wenn dieses Fahrzeug eine Absolutgeschwindigkeit von 260 km/h hätte. Das Geschwindigkeitsverhältnis 3 entspräche einem Fahrzeug, das dem eigenen Fahrzeug 10 extrem schnell entgegenkommt, also für eine Abstandsregelung ohnehin nicht relevant wäre.

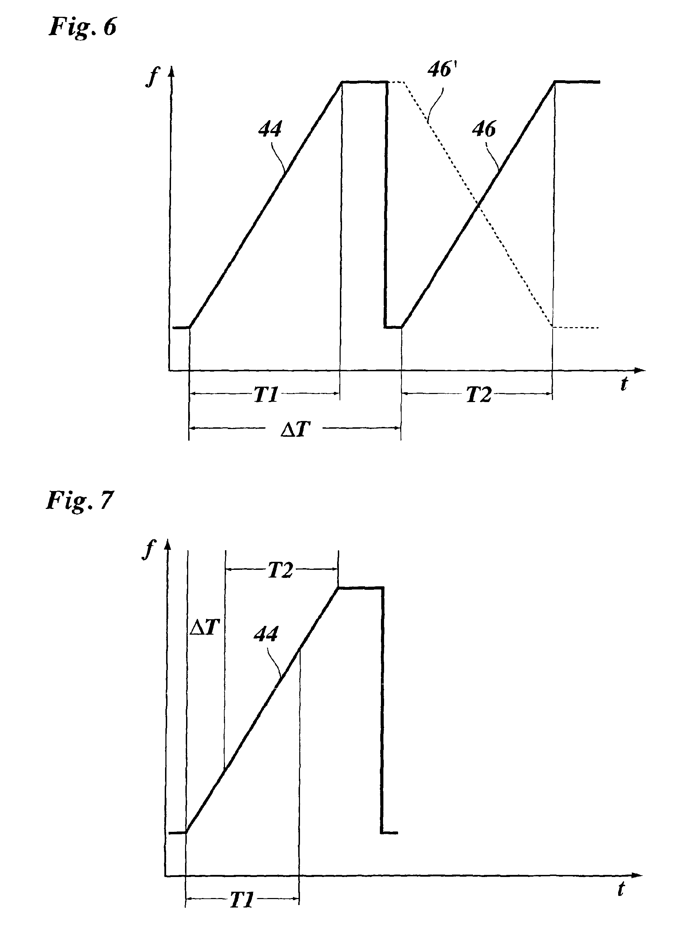

Das Funktionsprinzip der Filtereinrichtung 38 soll nun unter Bezugnahme auf Figur 6 erläutert werden. Hier ist die Frequenz f des modulierten, von der Antenne 32 gesendeten Radarsignals R gegen die Zeit t aufgetragen. Man erkennt, daß dieses Signal rampenförmig moduliert ist, mit einer ersten Rampe 44 und einer mit einem Zeitversatz ΔT darauf folgenden zweiten Rampe 46. Beide Rampen 42, 46 haben im gezeigten Beispiel die gleiche Dauer und die gleiche Steigung. Während einer Zeitspanne T1, die in der Rampe 44 liegt, werden in der Filtereinrichtung 38 die vom Analog/Digitial-Wandler 36 gelieferten digitalen Mischungssignale M in rascher zeitlicher Folge aufgezeichnet, so daß man eine digitalisierte Funktion M1 (t) erhält, die die Zielantwort während der Zeitspanne T1 repräsentiert. Entsprechend wird in der Zeitspanne T2, während der Dauer der Rampe 46, die Zielantwort in der Form einer Funktion M2(t) aufgezeichnet. Beide Zielantworten werden dann einer schnellen Fourier-Transformation unterzogen, so daß man zwei Spektren S1(f) und S2(f) erhält. Das gefilterte Spektrum S' wird dann dadurch gebildet, daß die jeweils zur gleichen Frequenz f gehörenden komplexen Funktionswerte S1 (f) und S2(f) addiert werden. Durch diese Addition oder Überlagerung der Spektren kommt es je nach Phasenlage zu destruktiver oder konstruktiver Interferenz und damit entweder zur Dämpfung oder zur Verstärkung. Die selektive Dämpfung für Standziele, also für das Geschwindigkeitsverhältnis Vr/Ve = 1, wird dadurch erreicht, daß der Zeitversatz Δt zwischen den beiden Rampen 44, 46 oder, genauer, zwischen den entsprechenden Meßintervallen T1, T2 gemäß folgender Formel in Abhängigkeit von der Eigengeschwindigkeit Ve des Fahrzeugs 10 bestimmt wird:

$$\Delta t = a * (\lambda/2) * (2\, Ve)^{-1} \hspace{3cm} (1)$$

In dieser Formel ist a eine ungerade ganze Zahl, die einerseits möglichst klein sein sollte, andererseits jedoch so groß sein muß, daß genügend Zeit für die Rampe 44 zur Verfügung steht, und λ ist die mittlere Wellenlänge des gesendeten Radarsignals R.

Während der Zeit ΔT hat sich der Abstand d zwischen dem Zielobjekt und dem Radarsensor 16 um ΔT * Vr geändert, und die vom Radarsignal zurückgelegte Wegstrecke ΔL vom Radarsensor zum Zielobjekt und zurück hat sich um das Zweifache dieses Betrages geändert.

$$\Delta L = 2 * Vr * \Delta T = a * (\lambda/2) * (Vr/Ve) \hspace{2cm} (2)$$

Für Vr/Ve = 1 ist somit $\Delta L$ ein ungeradzahliges Vielfaches der halben Wellenlänge, so daß die Zielantwort durch destruktive Interferenz unterdrückt wird.

Es ist zu bemerken, daß die Geschwindigkeitsselektivität dieser Filterfunktion nicht auf dem Dopplereffekt beruht, sondern vielmehr auf der Abstandsänderung zwischen Radarsensor und Zielobjekt während der Zeit $\Delta T$. Selbstverständlich muß der Steuer- und Auswerteeinrichtung 24 ein Signal zugeführt werden, das die Eigengeschwindigkeit Ve repräsentiert, und diese Einrichtung muß so ausgelegt oder programmiert sein, daß sie bei der Erzeugung des Modulationssinals den Zeitversatz $\Delta T$ entsprechend der Formel (1) bestimmt. Erforderlichenfalls kann dabei auch die Wiederholfrequenz der Rampen angepaßt werden.

Bei der obigen Darstellung wurde nicht berücksichtigt, daß die Standziele, etwa die Pfosten 22, deren Zielantwort zu unterdrücken ist, sich nicht auf der Fahrbahn 12, sondern seitlich neben der Fahrbahn befinden und deshalb vom Radarsensor 16 unter einem bestimmten Winkel $\alpha$ gesehen werden, wie in Figur 1 dargestellt ist. Die Abstandsänderung $\Delta L$ ist deshalb genau genommen nicht proportional zur Eigengeschwindigkeit Ve, sondern proportional zu Ve * cos($\alpha$). In einer verfeinerten Ausführungsform der Filtereinrichtung 38 wird deshalb der Zeitversatz $\Delta T$ nach der folgenden Formel bestimmt:

$$\Delta T = a * (\lambda/2) * (2\ Ve * \cos(\alpha))^{-1} \qquad (3)$$

Um die erwähnte Mehrdeutigkeit der Zielantwort zu beseitigen und aus den gefilterten Spektren gemäß Figur 5 die Abstände und Relativgeschwindigkeiten der bewegten Zielobjekte zu berechnen, wird die oben beschriebene Prozedur abwechselnd mit zwei unterschiedlichen Rampensteigungen durchgeführt. Zum Beispiel können auf die beiden Rampen 44, 46 zwei fallende Rampen folgen, die dem Betrage nach die gleiche Steigung wie die Rampen 44, 46 haben. Indem man einerseits die Summe und andererseits die Differenz der mit steigenden und fallenden Rampen gemessenen Frequenzen f2 des Peaks 42 bildet, lassen sich dann die Relativgeschwindigkeit Vr und der Abstand d des Fahrzeugs 14 berechnen.

Allgemein ist es nicht erforderlich, daß die Rampen 44 und 46 in Figur 6 die gleiche Steigung und die gleiche Dauer haben. Es ist sogar möglich, anstelle der steigenden Rampe 46 eine fallende Rampe 46' zu verwenden, wie in Figur 6 gestrichelt eingezeichnet ist. Die durch den unterschiedlichen Frequenzverlauf verursachten Effekte müssen dann rechnerisch korrigiert werden. Die Eingangs beschriebene Ausführungsform mit zwei steigenden Rampen 44, 46 hat dagegen den Vorteil, daß der Rechenaufwand für die Filterprozedur reduziert wird und außerdem eine sehr wünschenswerte Signalverstärkung bei Relativgeschwindigkeiten in der Nähe von null erreicht wird.

Figur 7 illustriert eine abgewandelte Ausführungsform, bei der die beiden Meßintervalle T1 und T2 auf derselben Rampe 44 liegen und einander überlappen, so daß der Zeitversatz $\Delta T$ sehr klein ist. Diese Ausführungsform läßt sich insbesondere bei hohen Eigengeschwindigkeiten Ve mit a = 1 realisieren. Allerdings können bei dieser Ausführungsform die beiden Spektren S1 und S2 nicht direkt überlagert werden, da sie bei unterschiedlichen Frequenzen aufgenommen wurden. Dieser Frequenzunterschied bewirkt, daß sich die beiden Fourier-Spektren S1 und S2 um einen zusätzlichen Phasenfaktor der Form

$$\exp(-i * 2\pi * (2 * d/c) * m * \Delta T \qquad (4)$$

unterscheiden. Darin ist d der Abstand zum Zielobjekt, c die Lichtgeschwindigkeit und m die Steigung der Rampe 44. Diese Phasendifferenz muß rechnerisch kompensiert werden, bevor die beiden Spektren addiert werden. Der Abstand d ist wegen der erwähnten Mehrdeutigkeit noch nicht bekannt, läßt sich jedoch nährungsweise unter der Annahme bestimmen, daß es sich bei den Zielobjekten um Standziele handelt (Vr = Ve, Dopplerverschiebung bekannt). Mit dem so ermittelten Wert für d läßt sich dann die erforderliche Korrektur ausführen. Dabei ist es zweckmäßig, wenn die Steigung m der Rampe 44 möglichst klein ist, damit das Auftreten von für bewegte Objekte "blinden" Bereichen (Geschwindigkeitsbereiche mit starker Dämpfung) möglichst weitgehend vermieden wird. Bei niedriger Eigengeschwindigkeit Ve ist es denkbar, die Rampensteigung m im Hinblick auf die Eigengeschwindigkeit Ve und vorhandener relevanter Ziele anzupassen.

**Patentansprüche**

1. FMCW-Radarsystem für Kraftfahrzeuge (10), mit einer Filtereinrichtung (38) zur selektiven Unterdrückung der Zielantwort von Standzielen (22), **dadurch gekennzeichnet, daß** die Filtereinrichtung (38) dazu ausgebildet ist, die Zielantwort (M) während zweier um einen Zeitversatz DT verschiedener Zeitspannen (T1, T2) aufzunehmen und einander zu überlagern, wobei der Zeitversatz DT abhängig von der Eigengeschwindigkeit Ve des Fahrzeugs (10) so bestimmt ist, daß die Zielantworten für die Standziele (22) bei der Überlagerung destruktiv interferieren.

2. Radarsystem nach Anspruch 1, **dadurch gekennzeichnet, daß** die Filtereinrichtung (38) dazu ausgebildet ist, die während der beiden Zeitspannen (T1, T2) aufgenommenen Zielantworten als Funktionen der Zeit aufzuzeichnen, durch Fourier-Transformationen dieser Funktionen die zugehörigen Spektren (S) zu berechnen und die Spektren komplex zu addieren.

3. Radarsystem nach einem der vorstehenden Ansprüche, **dadurch gekennzeichnet, daß** eine Steuer- und Auswerteeinrichtung (24) dazu ausgebindet ist, die Frequenz des gesendeten Radarsignals (R) rampenförmig zu modulieren, und daß die Zeitspannen (T1, T2), in denen die Zielantworten (M) aufgenommen werden, in aufeinanderfolgenden Rampen (44, 46) liegen.

4. Radarsystem nach Anspruch 3, **dadurch gekennzeichnet, daß** die Rampen (44, 46) die gleiche Steigung (m) haben.

5. Radarsystem nach Anspruch 1 oder 2, **dadurch gekennzeichnet, daß** eine Steuer- und Auswerteeinrichtung (24) dazu ausgebildet ist, die Frequenz des gesendeten Radarsignals (R) rampenförmig zu modulieren, und daß die Zeitspannen (T1, T2), in denen die Zielantworten (M) aufgezeichnet werden, auf derselben Rampe (44) liegen und einander überlappen.

6. Radarsystem nach Anspruch 5, **dadurch gekennzeichnet, daß** die Steuer- und Auswerteeinrichtung (24) dazu ausgebildet ist, die Steigung (m) der Rampe (44) in Abhängigkeit von der Eigengeschwindigkeit (Ve) des Fahrzeugs (10) zu variierten.

**Claims**

1. FMCW radar system for motor vehicles (10), having a filter device (38) for selectively suppressing the target response of stationary targets (22), **characterized in that** the filter device (38) is designed to pick up the target response (M) during two time periods (T1, T2) which differ by a time offset DT, and to superimpose one on the other, wherein the time offset DT is determined as a function of the velocity Ve of the vehicle (10) in such a way that the target responses for the stationary targets (22) interfere destructively when the superimposition occurs.

2. Radar system according to Claim 1, **characterized in that** the filter device (38) is designed to record the target responses, picked up during the two time periods (T1, T2), as functions of time, to calculate the associated spectra (S) by means of Fourier transformations of these functions, and to add the spectra in a complex fashion.

3. Radar system according to one of the preceding claims, **characterized in that** a control and evaluation device (24) is designed to modulate the frequency of the transmitted radar signal (R) in a ramp shape, and **in that** the time periods (T1, T2) in which the target responses (M) are picked up are located in successive ramps (44, 46).

4. Radar system according to Claim 3, **characterized in that** the ramps (44, 46) have the same gradient (m).

5. Radar system according to Claim 1 or 2, **characterized in that** a control and evaluation device (24) is designed to modulate the frequency of the transmitted radar signal (R) in the form of a ramp, and **in that** the time periods (T1, T2) in which the target responses (M) are recorded are located on the same ramp (44) and overlap one another.

6. Radar system according to Claim 5, **characterized in that** the control and evaluation device (24) is designed to vary the gradient (m) of the ramp (44) as a function of the velocity (Ve) of the vehicle (10).

**Revendications**

1. Système radar FMCW pour véhicules automobiles (10), doté d'un système de filtrage (38) qui abaisse de manière sélective la réponse de cibles statiques (22),
**caractérisé en ce que**
le système de filtrage (38) est configuré pour enregistrer la réponse (M) de la cible pendant deux intervalles de temps (T1, T2) qui diffèrent d'un décalage temporel DT et pour les superposer l'une à l'autre, le décalage temporel DT étant défini en fonction de la vitesse propre Ve du véhicule (10), de telle sorte que les réponses des cibles statiques (22) interfèrent de manière destructive lors de la superposition.

2. Système de radar selon la revendication 1, **caractérisé en ce que** le système de filtrage (38) est configuré pour représenter les réponses des cibles enregistrées pendant les deux intervalles de temps (T1, T2) en fonction du temps, pour calculer par transformation de Fourier les spectres (S) associés à ces fonctions et pour réaliser l'addition complexe des spectres.

3. Système radar selon l'une des revendications précédentes, **caractérisé en ce qu'**un système (24) de commande et d'évaluation est configuré pour moduler en forme de rampe la fréquence du signal radar émis (R) et **en ce que** les intervalles de temps (T1, T2) pendant lesquels les réponses (M) des cibles sont enregistrées sont situés dans des rampes (44, 46) successives.

4. Système radar selon la revendication 3, **caractérisé en ce que** les rampes (44, 46) ont la même pente (m).

5. Système radar selon les revendications 1 ou 2, **caractérisé en ce qu'**un système de commande et d'évaluation (24) est configuré pour moduler en forme de rampe la fréquence du signal radar (R) émis et **en ce que** les intervalles de temps (T1, T2) au cours desquels les réponses (M) des cibles sont représentées sont situés sur la même rampe (44) et se superposent mutuellement.

6. Système radar selon la revendication 5, **caractérisé en ce que** le système (24) de commande et d'évaluation est configuré pour faire varier la pente (m) de la rampe (44) en fonction de la vitesse propre (Ve) du véhicule (10).

## Fig. 1

## Fig. 2

**Fig. 3**

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4242700 A1
- DE 3243825 A1
- US 5285207 A
- US 4620192 A
- US 4348675 A